# EUROPÄISCHE PATENTSCHRIFT

(11) **EP 3 198 254 B1**
(45) Veröffentlichungstag und Bekanntmachung des Hinweises auf die Patenterteilung: **07.11.2018**
(21) Anmeldenummer: 15766786.6
(22) Anmeldetag: 16.09.2015
(51) Int. Cl.: G01M 3/32

(54) **FOLIENKAMMER MIT HALTEPROFIL**
FILM CHAMBER WITH RETAINING PROFILE
CHAMBRE EN FILM AVEC PROFILÉ DE FIXATION

(30) Priorität: 25.09.2014 DE 102014219473
(43) Veröffentlichungstag der Anmeldung: 02.08.2017
(73) Patentinhaber: Inficon GmbH, 50968 Köln (DE)
(72) Erfinder: VAN TRIEST, Hendrik, 50827 Köln (DE); DAUENHAUER, Michael, 50937 Köln (DE)
(74) Vertreter: dompatent von Kreisler Selting Werner - Partnerschaft von Patent- und Rechtsanwälten mbB
(86) Internationale Anmeldenummer: PCT/EP2015/071180
(87) Internationale Veröffentlichungsnummer: WO 2016/046039

(56) Entgegenhaltungen:
- DE-A1- 19 935 293
- DE-A1-102012 200 063
- US-A- 5 513 516

## Beschreibung

Die Erfindung betrifft eine Folienkammer zur Aufnahme eines auf das Vorhandensein eines Lecks zu prüfenden Prüflings.

Bei einer Folienkammer handelt es sich um eine besondere Form einer Prüfkammer zur Aufnahme eines auf Dichtheit zu prüfenden Prüflings. Die Folienkammer zeichnet sich dadurch aus, dass mindestens ein Wandbereich aus einem flexiblen Material (Folie) besteht. Ein auf das Vorhandensein eines Lecks zu prüfender Prüfling wird in das Innere der Folienkammer gegeben und die Folienkammer anschließend evakuiert. Beim Evakuieren der Folienkammer wird die Luft aus der Folienkammer gesogen, wodurch sich die flexible Folienkammerwand an den Prüfling anschmiegt. Eine besonders geeignete Folienkammer besteht aus zwei Folienlagen, die den Prüfling umschließen und die in deren Randbereich gasdicht miteinander verbunden wird.

Zum gasdichten Verschließen der Folienkammer wird diese im Rahmenbereich gedichtet. Dabei ist es bekannt, die Folienlagen zwischen Klemmflächen der Rahmenelemente festzuklemmen, wobei durch das Zusammenpressen der Rahmenelemente die Folienlagen durch Flächenpressung gehalten werden. Die Rahmenelemente müssen dabei mit einer großen Kraft gegeneinander gepresst werden. Hierbei kann es zu Verformungen der Rahmenelemente kommen, was zur Folge haben kann, dass nur noch ein geringer Bereich der Klemmfläche die Klemmkraft auf die Folie überträgt. Bei Zugbeanspruchung kann sich die Folienlage aus dem Klemmsitz lösen.

DE 10 2012 200 063 A1 beschreibt eine Vorrichtung zur Lecksuche an einem nicht formstarren Prüfling, mit einer aus zwei Folienlagen gebildeten Folienkammer als Prüfkammer für den Prüfling.

US 5,513,516 A beschreibt eine aus starren Wänden gebildete Prüfkammer zur Leckageprüfung an einem Prüfling.

Der Erfindung liegt die Aufgabe zugrunde, eine Folienkammer mit einer verbesserten Befestigung der Folienlagen zu schaffen.

Die erfindungsgemäße Folienkammer ist definiert durch die Merkmale von Anspruch 1.

Demnach weist jede der mindestens zwei Folienlagen in deren Randbereich ein Halteprofil auf, das in Eingriff mit einer entsprechenden Haltenut in der Klemmfläche des jeweiligen Rahmenelements gebracht wird, um eine Formschlussverbindung zwischen der Folienlage und dem Rahmenelement zu schaffen. Jede Folienlage wird dann an dem jeweiligen Rahmenelement gehalten, ohne dass die herkömmliche Flächenpressung erforderlich ist. Die beiden Rahmenelemente werden anschließend mit ihren Dichtungselementen aneinandergelegt, um eine gasdichte Verbindung zwischen den Folienkammerhälften in deren Randbereich zu schaffen. Dabei muss lediglich eine Kraft auf die Rahmenelemente aufgebracht werden, die ausreicht, um Kontakt zwischen der Lippendichtung und der Dichtfläche zu schaffen. Die auf die Rahmen aufzubringende Kraft muss somit nicht mehr so groß sein, um die Folienlagen zwischen den Klemmflächen festzuklemmen. Die Verbindung zwischen den Folienlagen und den Rahmenelementen ist dadurch stabiler bei einer geringeren auf die Rahmenelemente aufzubringenden Kraft.

Vorzugsweise sind genau zwei Folienlagen vorgesehen, zwischen denen mittig der Prüfling platziert wird. Jede der beiden Folienlagen ist dann in deren Randbereich an genau einem Rahmenelement gehalten. Das Rahmenelement ist umlaufend um den äußeren Rand der Folienlage ausgebildet und kann einstückig sein oder aus mehreren Rahmenelementteilen zusammengesetzt sein. Zwischen den beiden Klemmflächen der beiden Rahmenelemente ist vorzugsweise mindestens eine umlaufende Dichtung, zum Beispiel in Form eines O-Rings, vorgesehen, um einen gasdichten Sitz zwischen den beiden Rahmenelementen zu schaffen.

Das Halteprofil im Randbereich jeder Folienlage ist als Vorsprung oder Nase ausgebildet. Die zugehörige Haltenut des jeweiligen Rahmelements ist komplementär zu dem Halteprofil ausgebildet. Halteprofil und Haltenase können dabei eine hinterschnittene Form für einen besonders stabilen Halt aufweisen. Besonders vorteilhaft ist es, wenn der Randbereich des Halteprofils und der Haltenut im Querschnitt jeweils einen Polygonzug bilden. Bei Zugbeanspruchung der Folienlage kann das Halteprofil dann nicht aus der Haltenut herausgehebelt werden.

An jedem Rahmenelement und vorzugsweise an dessen Klemmfläche ist ein Halteelement anbringbar, das das Halteprofil gegen Herausrutschen aus der Haltenut sichert. Das Halteelement kann beispielsweise an der Klemmfläche festgeschraubt werden und die Haltenut überdecken.

Im Folgenden wird anhand der Figuren ein Ausführungsbeispiel der Erfindung näher erläutert. Es zeigen:

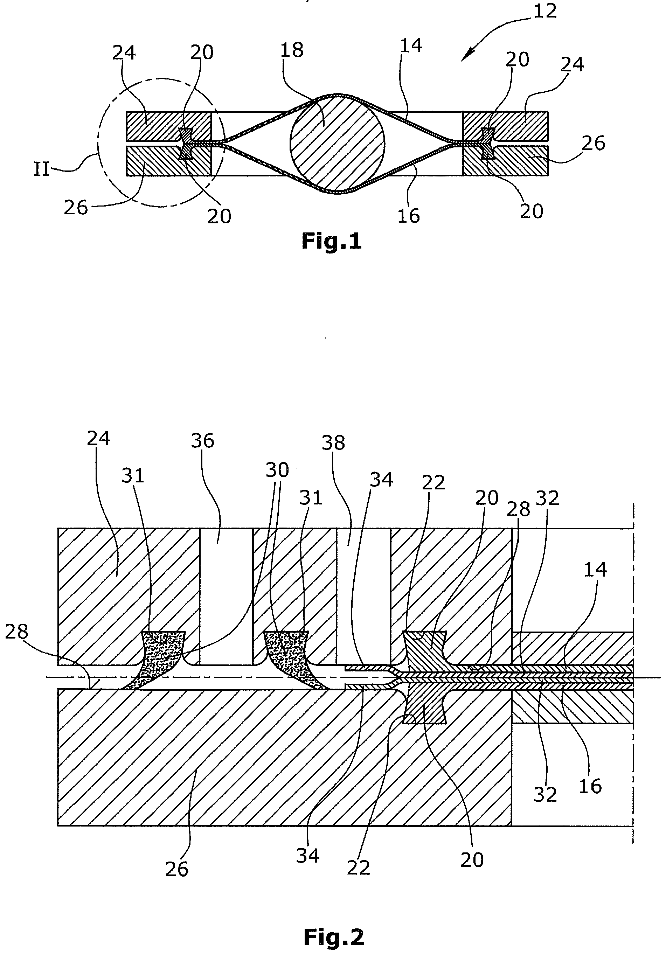

- Figur 1: einen Schnitt durch die Folienkammer und
- Figur 2: das Detail gemäß II in Figur 1.

Die Folienkammer 12 weist zwei Folienlagen 14, 16 auf, die in deren Randbereich aneinandergelegt sind und in deren Mitte einen Prüfling umschließen. Jede Folienlage 14, 16 weist in deren Randbereich ein umlaufendes Halteprofil 20 auf, das der jeweiligen Folienlage 14, 16 einstückig angeformt ist. Das Halteprofil 20 der Folienlage 14 ist in eine Haltenut 22 eines ersten Rahmenelements 24 eingebracht. Das Halteprofil 20 der unteren Folienlage 16 ist in eine Haltenut 22 eines zweiten Rahmenelements 26 eingebracht. Die Haltenuten 22 sind jeweils in einer Fläche des jeweiligen Rahmenelements 24, 26 ausgebildet. Bei den Haltenuten 22 handelt es sich um umlaufende Vertiefungen, deren Form zu der Form des jeweiligen Halteprofils 20 komplementär ist. Jedes Halteprofil 20 ist dabei als umlaufender Vorsprung in dem Randbereich der Folienlage ausgebildet. Jede Folienlage 14, 16 kann insbesondere auch mehrere Halteprofile mit unterschiedlichen Umlaufprofilen aufweisen, die in entsprechenden mehreren Haltenuten mit unterschiedlichen Umlaufprofilen in dem jeweiligen Rahmenelement eingreifen.

Die Rahmenelemente 24, 26 sind mit ihren Klemmflächen 28 aneinandergelegt, wobei zwischen den Klemmflächen 28 eine Dichtung 30 gehalten wird, um eine gasdichte Verbindung für eine hermetisch abgeschlossene Folienkammer 12 zu schaffen. Die Dichtung 30 wird durch zwei voneinander beabstandete Dichtlippen gebildet, die jeweils in eine Dichtungsnut 31 des einen Rahmenelements 24 gehalten sind und gegen die Klemmfläche 28 des anderen Halteelements 26 gepresst werden. Zwischen den beiden Dichtlippen der Dichtung 30 ist in dem einen der beiden Rahmenelemente 24 ein Entlüftungskanal 36 ausgebildet, über den der Zwischenraum zwischen den beiden Dichtlippen und den angrenzenden Klemmflächen 28 evakuiert werden kann. Desweiteren ist zwischen der Dichtung 30 und den Halteprofilen 20 der Folienlagen 14, 16 ein Entlüftungskanal 38 in einem der beiden Rahmenelemente 24 vorgesehen. Über den Entlüftungskanal 38 wird der Zwischenraum zwischen den beiden Folienlagen 14, 16 und somit die Folienkammer 12 evakuiert.

Jede Haltenut 22 wird von einem Gasleitelement 32 bedeckt, um das jeweilige Halteprofil 20 gegen Herausrutschen aus der Haltenut 22 zu sichern. Dabei ist jedes Gasleitelement 32 mit Klett 34 an der jeweiligen Klemmfläche 28 fixiert.

Die Erfindung bietet den Vorteil, dass die Folienlagen 14, 16 nicht in den beiden Rahmenelementen 24, 26 durch Flächenpressung festgeklemmt werden müssen, um eine stabile Verbindung zu schaffen, die auch ausreichend auf Zug beanspruchbar ist. Die Rahmenelemente müssen nur mit einer solchen Kraft aneinandergepresst werden, dass eine gasdichte Verbindung geschaffen wird. Der Eingriff aus Halteprofil 20 und Haltenut 22 bildet dabei einen formschlüssigen, gasdichten Sitz, der eine ausreichende Zugbeanspruchung der jeweiligen Folienlage 14, 16 ermöglicht.

## Patentansprüche

1. Folienkammer (12) zur Aufnahme eines auf das Vorhandensein eines Lecks zu testenden Prüflings, mit mindestens zwei Folienlagen (14, 16) und mit mindestens zwei Rahmenelementen (24, 26), die jeweils eine Dichtfläche zum gasdichten Aneinanderlegen der beiden Rahmenelemente (24, 26) aufweisen, um die Folienkammer (12) hermetisch zu verschließen, wobei die beiden Folienlagen (14, 16) jeweils in einem Randbereich mindestens ein Halteprofil (20) aufweisen **dadurch gekennzeichnet, dass** die beiden Rahmenelemente (24, 26) jeweils in ihrer Dichtfläche mindestens eine Haltenut (22) zu einer Aufnahme eines Halteprofils (20) derart aufweisen, dass die beiden Folienlagen (14, 16) zwischen den beiden Rahmenelementen (24, 26) durch eine Formschlussverbindung gehalten werden.

2. Folienkammer (12) nach Anspruch 1, **dadurch gekennzeichnet, dass** jede Folienlage (14, 16) das Halteprofil (20) einstückig, zum Beispiel gegossen, oder als angeklebtes oder angeschweißtes separates Teil aufweist.

3. Folienkammer (12) nach Anspruch 1 oder 2, **dadurch gekennzeichnet, dass** das Halteprofil (20) und die Haltenut (22) komplementär zueinander ausgebildet sind und die Haltenut (22) hinterschnitten ausgebildet ist.

4. Folienkammer (12) nach einem der vorhergehenden Ansprüche, **dadurch gekennzeichnet, dass** der Rand jedes Halteprofils (20) im Querschnitt einen Polygonzug bildet.

5. Folienkammer (12) nach einem der vorhergehenden Ansprüche, **dadurch gekennzeichnet, dass** jedes Rahmenelement (24, 26) mit einem Gasleitelement (32) derart versehen ist, dass das Gasleitelement (32) ein versehentliches Herausrutschen des Halteprofils (20) aus der Haltenut (22) verhindert.

6. Folienkammer (12) nach einem der vorhergehenden Ansprüche, **dadurch gekennzeichnet, dass** zwischen den Dichtflächen (28) der beiden Rahmenelemente (24, 26) eine gasdichte Dichtung (30) vorgesehen ist.

7. Folienkammer (12) nach Anspruch 6, **dadurch gekennzeichnet, dass** die Dichtung (30) durch mindestens zwei voneinander beabstandete Dichtlippen, die jeweils in einer Haltenut (31) in einem der beiden Rahmenelemente (24, 26) gehalten sind, geschaffen ist.

8. Folienkammer (12) nach dem vorhergehenden Anspruch, **dadurch gekennzeichnet, dass** zwischen den beiden Dichtlippen ein Entlüftungskanal (36) in einem der beiden Rahmenelemente (24, 26) geschaffen ist.

9. Folienkammer (12) nach einem der Ansprüche 6 - 8, **dadurch gekennzeichnet, dass** zwischen der Dichtung (30) und dem Halteprofil (20) ein Entlüftungskanal (38) in mindestens einem der beiden Rahmenelemente (24, 26) zum Evakuieren der Folienkammer geschaffen ist.

## Claims

1. Film chamber (12) for receiving a test object to be tested for the presence of a leak, comprising at least two film layers (14, 16) and at least two frame elements (24, 26), each of which has a sealing surface so that the two frame elements (24, 26) lie against each other in a gas-tight manner in order to hermetically seal the film chamber (12),
wherein each of the two film layers (14, 16) has at least one retaining profile (20) in an edge portion,
**characterized in that** each of the two frame elements (24, 26) has at least one retaining groove (22) in their sealing surface in order to receive a retaining profile (20) such that the two film layers (14, 16) are held between the two frame elements (24, 26) substantially by a form-fitting connection.

2. Film chamber (12) of claim 1, **characterized in that** each film layer (14, 16) comprises the retaining profile (20) either integrally, for example molded thereto, or as a separate member glued or welded thereto.

3. Film chamber (12) of claim 1 or 2, **characterized in that** the retaining profile (20) and the retaining groove (22) are designed to be complementary with each other and the retaining groove (22) is designed to be undercut.

4. Film chamber (12) of one of the preceding claims, **characterized in that** the edge of each retaining profile (20) forms a traverse seen in cross section.

5. Film chamber (12) of one of the preceding claims, **characterized in that** each frame element (24, 26) is provided with a gas-carrying element (32) such that the gas-carrying element (32) prevents the retaining profile (20) from inadvertently slipping out of the retaining groove (22).

6. Film chamber (12) of one of the preceding claims, **characterized in that** a gas-tight seal (30) is provided between the sealing surfaces (28) of the two frame elements (24, 26).

7. Film chamber (12) of claim 6, **characterized in that** the seal (30) is provided by at least two spaced apart sealing lips respectively retained in a retaining groove (31) in one of the frame elements (24, 26).

8. Film chamber (12) of the preceding claim, **characterized in that** a ventilation channel (36) is provided in one of the two frame elements (24, 26) between the two sealing lips.

9. Film chamber (12) of one of claims 6 - 8, **characterized in that** a ventilation channel (38) for the evacuation of the film chamber is provided in at least one of the two frame elements (24, 26) between the seal (30) and the retaining profile (20).

## Revendications

1. Chambre à film (12), destinée à recevoir un échantillon à tester pour rechercher la présence d'une fuite, comprenant au moins deux couches de film (14, 16) et au moins deux éléments de cadre (24, 26) qui possèdent chacun une surface d'étanchéité pour placer les deux éléments de cadre (24, 26) l'un contre l'autre de manière étanche aux gaz pour ferme hermétiquement la chambre à film (12),
les deux couches de film (14, 16) comportant chacune au moins un profilé de retenue (20) dans une région de bord, **caractérisé en ce que**
les deux éléments de cadre (24, 26) comportent chacun dans leur surface d'étanchéité au moins une rainure de retenue (22) destinée à recevoir un profilé de retenue (20) de telle sorte que les deux couches de film (14, 16) sont maintenues entre les deux éléments de cadre (24, 26) par une liaison par complémentarité de formes.

2. Chambre à film (12) selon la revendication 1, **caractérisée en ce que** chaque couche de film (14, 16) comporte le profilé de retenue (20) d'une seule pièce, par exemple par moulage, ou comme partie séparée collée ou soudée.

3. Chambre à film (12) selon la revendication 1 ou 2, **caractérisée en ce que** le profilé de retenue (20) et la rainure de retenue (22) sont formés de manière complémentaire l'un à l'autre et la rainure de retenue (22) est formée en contre-dépouille.

4. Chambre à film (12) selon l'une des revendications précédentes, **caractérisée en ce que** le bord de chaque profilé de retenue (20) forme un polygone en coupe transversale.

5. Chambre à film (12) selon l'une des revendications précédentes, **caractérisée en ce que** chaque élément de cadre (24, 26) est pourvu d'un élément de guidage de gaz (32) de telle sorte que l'élément de guidage de gaz (32) empêche le profilé de retenue (20) de sortir accidentellement de la rainure de retenue (22).

6. Chambre à film (12) selon l'une des revendications précédentes, **caractérisée en ce qu'**une garniture d'étanchéité (30) étanche aux gaz est prévue entre les surfaces d'étanchéité (28) des deux éléments de cadre (24, 26) .

7. Chambre à film (12) selon la revendication 6, **caractérisée en ce que** la garniture d'étanchéité (30) est réalisée par au moins deux lèvres d'étanchéité, espacées l'une de l'autre, qui sont retenues chacune dans une rainure de retenue (31) ménagée dans l'un des deux éléments de cadre (24, 26).

8. Chambre à film (12) selon la revendication précédente, **caractérisée en ce qu'**un conduit de purge (36) est ménagé dans l'un des deux éléments de cadre (24, 26) entre les deux lèvres d'étanchéité.

9. Chambre à film (12) selon l'une des revendications 6 à 8, **caractérisée en ce que** un conduit de purge (38) est ménagé dans l'un au moins des deux éléments de cadre (24, 26) entre la garniture d'étanchéité (30) et le profilé de retenue (20) pour faire le vide dans la chambre à film.
